Europäisches Patentamt

European Patent Office

Office européen des brevets

(19)

(11) **EP 1 221 816 A2**

(12) **EUROPEAN PATENT APPLICATION**

(43) Date of publication:
**10.07.2002 Bulletin 2002/28**

(51) Int Cl.$^7$: **H04N 7/26**

(21) Application number: **01130063.9**

(22) Date of filing: **18.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **20.12.2000 GB 0031085**

(71) Applicant: **MOTOROLA, INC.**
**Schaumburg, IL 60196 (US)**

(72) Inventors:
• **Hare, Jonathan Stephen**
**Tradley, Hants RG26 3UA (GB)**

• **Hobson, Paola Marcella**
**Alton, Hampshire GU34 2SQ (GB)**
• **Dolbear, Catherine Mary**
**Reading, Berkshire RG31 7HW (GB)**

(74) Representative: **Treleven, Colin et al**
**Motorola European Intellectual Property Operations,**
**Midpoint,**
**Alencon Link**
**Basingstoke, Hampshire RG21 7PL (GB)**

(54) **Video transmission system, video transmission unit and method for watermarking**

(57)      A video transmission system (100, 200) comprising a discrete cosine transform function (104, 208) receiving an unwatermarked video signal transmission and means for applying a watermark coefficient to the video signal transmission output from the discrete cosine transform function to protect the integrity of the video signal.

A video communication unit, a tamper detection method and methods for watermarking and recovering watermarks are also provided.

Such concepts provide for watermarking of SNR enhancement layers for scalable compressed video and allow only the user with the correct key to recover the watermark, thereby stopping any possibility of a collusion attack on the sequence to remove the watermark or discover its contents. Hence, it is useful in tamper detection applications such as authentication or copyright. Furthermore, it provides a means of fragile watermarking that allow attacks to be characterised.

FIG. 1  100

EP 1 221 816 A2

**Description**

Field of the Invention

This invention relates to video transmission systems and in particular to video watermarking for use in any video transmission system. The invention is applicable to, but not limited to, any Discrete Cosine Transform (DCT) based video compression system where the video has been compressed using a scalable compression method.

Background of the Invention

In the field of this invention, it is known that images, or a series of images, in a video stream may be tampered with. It is also known that a need exists to protect such images or video stream from tampering. One known technique employed to protect still images or documents is by the use of "watermarks".
In image watermarking, a known binary pattern or signature is embedded into an image at the moment of image acquisition. Such watermarks are termed "robust", because they are designed to remain intact regardless of any post-processing of the image such as filtering, cropping, etc.
While such watermarks do provide a useful degree of protection to still images, they cannot, at present, be wholly relied upon to protect other forms, for example documents.
As a digital video stream is a series of digital images, the concept of watermarking still images has been considered for extension to video technology. R. Wolfgang, C. Podilchuk and E. Delp - "Perceptual Watermarks of Digital Images", Proceedings of the IEEE INTCONF Image Processing - describes a technique for watermarking discrete cosine transform (DCT) block-based video, namely digital I frames in a MPEG sequence.
This paper describes the concept of embedding a watermark into an image in the transform domain (e.g. using DCT or wavelet coefficients). After the appropriate transform has been applied to the image (e.g. block based DCT), a coefficient X(u,v) is modified according to the following equation:

$$Y(u,v) = X(u,v) + J(u,v)W(u,v) \qquad (1)$$

if

$$|X(u,v)| > J(u,v) \qquad (2)$$

else

$$Y(u,v) = X(u,v) \text{ (3)} \qquad (3)$$

Where W(u,v) is the watermark sequence and J(u,v) is a parameter indicating the "just noticeable difference" for each transform coefficient. This method only allows detection of the presence of the watermark, and requires the original image for detection.
One video technique that is increasing in its popularity is scalable video. Scalable video refers to the ability to achieve video of more than one resolution and/or quality simultaneously. A scalable bit stream is one that may be decoded at different rates, according to the bandwidth available at the decoder. This enables the user with access to a higher bandwidth channel to decode high quality video, whilst a lower bandwidth user is still able to view the same video, albeit at a lower quality.
One mode of enhancement is known as Signal to noise ratio (SNR) scalability. SNR scalability refers to the process of improving the picture signal to noise ratio (PSNR) of a base layer picture by including additional error information in one or more enhancement layers.
This additional error information may be used to either:

     (i) increase the spatial quality of the still or video image, or
     (ii) increase the spatial resolution of the picture (this is known as spatial scalability),

and in both cases may be encoded in Enhancement Intra (EI) or Enhancement Predicted (EP) pictures.
The invention applies to both SNR and spatial scalable encoded video, although the description that follows refers mainly to SNR scalability for convenience.

In the scenario of a scalable video system where the base layer is freely available, but the enhancement layer requires extra capacity, there lies a need to be able to protect the enhancement layer from unlawful copying and distribution. For example, there could be a case where both the base and enhancement layers have been obtained legitimately, and have been recombined, but then illegally distributed.

The inventors of the present invention believe that no work has previously been carried out in the area of watermarking scalable video.

The techniques that are known to be used in a *block-based* video processing arrangement, such as that described in the aforementioned paper, are not appropriate for scalable video. Primarily, applying such block-based video processing to a SNR enhancement layer would destroy much of the enhancement information. In addition, such block-based video processing requires apriori knowledge of the original watermark sequence for recovery, and therefore a mathematical correlation-based test must be used to decide whether the watermark is present.

A watermarking system where the watermark could be recovered, without prior knowledge of the watermark sequence, would be much more useful for authentication purposes. This invention aims to provide a method for embedding and recovering a watermark within the enhancement layer of the video, which may present copyright or authentication information.

Thus there exists a need in the field of the present invention to provide a video transmission system, a video transmission unit and method for watermarking a digital image wherein the abovementioned disadvantages may be alleviated.

Prior art arrangements are known from published patent applications WO-A-9963505, EP-A-0977434, EP-A-0967803, and EP-A-0851679.

Statement of Invention

In accordance with the present invention there is provided a video transmission system, as claimed in claim 1.

In accordance with the present invention there is provided a video communication unit, as claimed in claim 12.

In accordance with the present invention there is provided a method of determining a confidence level in an integrity of a watermarked image in a video transmission system, as claimed in claim 13.

In accordance with the present invention there is provided a method of detecting tampering of a watermarked digital image, as claimed in claim 14.

In accordance with the present invention there is provided a method of watermarking a video signal transmission, as claimed in claim 15.

In accordance with the present invention there is provided method of recovering a watermark in a video signal transmission, as claimed in claim 17.

Brief Description of the Drawings

Exemplary embodiments of the present invention will now be described, with reference to the accompanying drawings, in which:

FIG. 1 shows a watermark casting block diagram, in accordance with a preferred embodiment of the invention.

FIG. 2 shows a watermark recovery block diagram, in accordance with a preferred embodiment of the invention.

FIG. 3 shows a threshold decision-making process in a watermark recovery process, in accordance with a preferred embodiment of the invention.

FIG. 4 shows a bit-classification mechanism in a watermark recovery process, in accordance with a preferred embodiment of the invention.

Description of Preferred Embodiments

In summary, the preferred embodiment of the invention provides a method of recovery of a watermarked image without apriori knowledge of the watermark sequence that had been employed in the encoding process. In particular, the invention provides a novel approach to the placement of a watermark within the enhancement layer frames (EI and EP) of a video image, whereby the watermark may still be recovered when the enhancement and base layers have been recombined.

Further, the preferred embodiment of the invention embeds a user-defined binary watermark pattern using a key. The key alters the placement of the watermark within each frame. This allows only the user with the correct key to recover the watermark, and stops any possibility of a collusion attack on the sequence to remove the watermark or discover its contents.

The preferred embodiment of the invention also has the advantageous effect that if there is any tampering with the enhancement layer, the recovery rate of the watermark will decrease. Because the approximate expected recovery rate is known, any tampering becomes evident by comparing the actual and expected recovery rates.

The preferred embodiment of the invention may be described as two separate processes, that of watermark casting and that of watermark recovery.

Watermark Casting

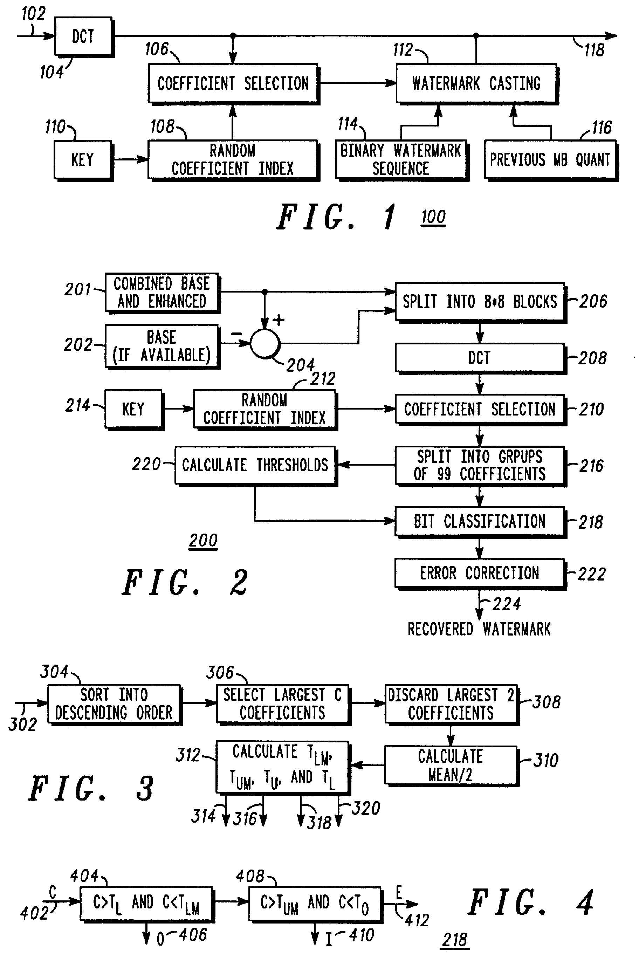

Referring first to FIG. 1, Fig. 1 shows a block diagram 100 of a scalable encoder in accordance with a preferred embodiment of the invention. An un-watermarked video signal transmission 102 is input to a DCT block 104 in order to perform the first stage of video compression in accordance with known art. The Discrete Cosine Transform is used in standard video compression methods such as H.263 and MPEG4.

In such systems, compression is achieved by quantisation of the resulting coefficients, and by their efficient encoding subsequent to quantisation. The watermarking method described in this invention is based on modifications to the DCT coefficients prior to quantisation. The output transmission from the DCT block 104 is input to a coefficient selection process 106 that receives a user-specific pseudo-random number generated by user-specific key 110 coupled to random coefficient index 108.

The selected coefficient is then modified in the watermark casting process by watermark casting block 112 in response to the current watermark bit (equation (4)). This modification is performed to ensure that the selected coefficient number will survive the quantisation process.

The selection of the positioning of the watermark, as generated by the watermark casting block 112 is determined by the random number generated by block 108. The watermark is cast into those positions, using the formula in equation (4). Blocks 114 and 116 supply the binary watermark sequence and previous MB quantisation values respectively to block 112.

At this stage, the watermark must be known to the user since they are the owner of the material to be watermarked. However, the actual positions at which the watermark bits are embedded, need not be known to the user, as this provides an additional level of security.

In summary, the watermark casting mechanism modifies the selected enhancement layer DCT coefficients in accordance with the following rule:

$$Coeff.=[Bin.Seq.\{0,1\}]*(([Prev.MB.Quant.\{2..31\}]*A)+B) \qquad (4)$$

where:

'A' is a scaling factor for the previous quantisation value, and
'B' is a constant integer for setting the strength of the watermark.

Experimentation showed that good values to be used in equation (4) are: A = 2 and B = 8 or 9, depending on how strong/visible the watermark is required to be.

The watermark casting block 112 then inserts the enhancement layer coefficient block into the DCT output bit stream 118, for each luminance SNR (or spatial) enhancement layer coefficient block.

It is noteworthy that a typical encoder operation includes the un-watermarked video signal transmission 102 input to a DCT block 104 and output as a bit stream 118. The watermark casting operation in accordance with the preferred embodiment of the invention may therefore be included as a bolt-on enhancement to the encoder operation.

In operation, the watermark is a binary sequence that is repeated, for example, four times per frame, to ensure robustness. Known video formats include common intermediate format (CIF) and quarter common intermediate format (QCIF). Thus for a typical QCIF image the watermark may have a length of 99 binary bits, with the 99 binary bits perhaps representing a 9 x 11 binary image.

There are various options for the physical embedding of the watermark. The physical embedding used in the preferred embodiment of the invention includes:

(i) for minimum visibility, if the watermark sequence has more 1's than 0's, it should be inverted (i.e. all the 1's turned into 0's and 0's into 1's); or
(ii) for optimum detection and resilience to errors (transmission errors, noise, etc.) the watermark should be embedded twice in its normal state and twice in an inverted state, within the frame; or

(iii)if the user is not concerned about visibility or robustness, the watermark sequence may be embedded as is.

In the preferred embodiment of the invention, the positioning of the watermark is performed to avoid visible detection and visible artefacts on the reconstructed image. Such positioning means that high diagonal frequencies are favoured.

In addition, the positioning needs to be carefully selected to reduce the chances of interference from the base layer. Advantageously the inventors have found that the diagonal frequencies selected to avoid visible detection and visible artefacts on the reconstructed image are also of low energy in the base layer.

Such selection of high frequencies needs to be rationalised against the need to be robust to compression of the enhancement layer. Positioning of the watermark to address the latter need favours slightly lower frequencies.

Experiments have shown that the Human Visual System (HVS) is less sensitive to the high frequencies towards the lower right of the coefficient array and is also less sensitive to diagonal frequency orientations. This implies that by placing the watermark in these high frequency, diagonally orientated coefficients it will be reasonably imperceptible.

As the discrete cosine transform (DCT) is additive:

$$DCT[A] + DCT[B] = DCT [A+B] \tag{5}$$

any changes to coefficients in the enhancement layer may be determined from a combined 'Base + Enhancement' layers.

Thus, by exploiting the quantiser it is possible to make a change to a coefficient in the enhancement layer and read back that change from the decoded combined Base + Enhancement layers. Partitioning of the bitstream into 'base' plus 'enhancement' is only a viable technique where the transmission or communication system may guarantee the reception of the base layer.

In the preferred embodiment of the invention, the selected watermark is only applied to the luminance of the enhancement layer. Preferably, each 8 x 8 DCT coefficient block conceals one watermark bit.

One example of an 8*8 DCT of the base layer, after quantisation and de-quantisation, is shown in Table 1:

Table 1:

| 1464 | -275 | -251 | -155 | -155 | -83 | -59 | 0 |
|------|------|------|------|------|-----|-----|---|
| 35 | 83 | 0 | 0 | -35 | -35 | -35 | 0 |
| 83 | -59 . | -35 | -35 | 35 | 0 | 0 | 0 |
| 59 | -59 | 0 | 0 | 0 | 0 | 0 | 0 |
| 59 | 0 | 0 | -35 | -35 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

In contrast, a corresponding example of an 8x8 DCT of the enhancement layer after quantisation and de-quantisation is shown in Table 2:

Table 2:

| 0 | 0 | 0 | 0 | 0 | 0 | 0 | 0 |
|---|---|---|---|---|---|---|---|
| 33 | 0 | 0 | 0 | 0 | 0 | 0 | 0 |
| 0 | -33 | 0 | 0 | 0 | 0 | 0 | 0 |
| 0 | 0 | 0 | 0 | 33 | 0 | 0 | 0 |
| 33 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

As the DCT function is additive, as demonstrated above, by placing the watermark in the lower right of the array it will still be seen after recombination of the layers because the DCT coefficients of the base layer at these frequencies tend to be quantised to "0". The blocks in the above Table 2, indicated in bold, are the blocks that are used in the preferred embodiment of this invention.

Therefore the preferred mechanism is as follows. For each luminance SNR enhancement layer coefficient block, a coefficient is chosen by a pseudo-random number generated from a key (for example by using a linear congruent random number generator with the key as the seed).

The selected coefficient is then altered, depending on the current watermark bit. If a binary "0" is to be cast, the coefficient is set to "0". If a binary "1" is to be cast, the coefficient value is changed such that it will survive the quantisation (equation (1)).

This process then repeats for all subsequent DCT blocks and frames. In this manner, a seeded key is used to pseudo-randomly generate a coefficient for watermark casting. The watermark casting utilises current watermark values and previous quantisation values to generate a luminance SNR enhancement layer coefficient block for insertion into the DCT block. Positioning of the watermark bit in the DCT coefficients of each of the SNR enhancement layer DCT blocks is carefully performed to minimize the visual effect of the introduced watermark.

Watermark Recovery

Referring now to FIG. 2, a watermark recovery block diagram 200, in accordance with a preferred embodiment of the invention, is shown. The arrangement in FIG. 2 is complementary to the watermark casting block diagram shown in FIG. 1.

Due to the nature of the watermarking process, the binary data that was embedded during the watermark casting process may be recovered directly from a combined 'base + enhanced' sequence 201, given the key used in the casting.

Each content owner will want to use their own method depending on the level of security they require. Some users may also scramble and encode the watermark before embedding. The technique proposed herein is generic enough to allow such possibilities. It is up to the user how they retain control over their key. The key is needed at the decoder to establish the positions where the watermark has been embedded.

It is within the contemplation of the invention that this key could be provided in an encrypted form that the person at the decoder cannot read, for example, only the decoding software may read the key.

Advantageously, in accordance with the preferred embodiment of the invention, the watermark data may also be recovered from the enhancement layer alone, provided that it can be made available. The inventors have established that recovery from the enhancement layer alone provides a slightly better recovery rate.

In an alternative embodiment, it is possible to access a version of the enhancement layer that has previously been legitimately received and stored. In accordance with the preferred embodiment of the present invention, a base layer and a number of enhancement layers are received. A user may decide to store these separately for future authentication purposes.

The recovery is performed by reading in the luminance of each frame of the 'base + enhanced' 201 and/or individual 'enhanced' (not shown) and 'base' 202 sequence. In one aspect of the latter case, the base layer (202) may be subtracted from the combined 'base + enhanced' 201 by the subtractor 204. The respective frame(s) are then input to a splitter function 206, that splits the frames into 8*8 blocks. The split frames are then applied to a DCT function 208.

Using the same key 214 and number generator 212, as used in the casting process in casting the particular watermark(s), the watermarked coefficient may be read from each DCT block 208 by coefficient selection function 210.

The watermarked coefficients are then applied to a coefficient splitter function 216 to split the coefficients into a number of groups per frame. In a preferred embodiment of the invention relating to QCIF video pictures, there may be 4 groups per frame, each of 99 coefficients.

Each group of coefficients has a threshold. The threshold is calculated using the threshold decision calculation process 220, further described in relation to FIG. 3.

The thresholds generated by threshold decision calculation process 220 are used to decide (and classify) whether each coefficient output from coefficient splitter function 216 corresponds to either a binary "1", binary "0", or an indeterminate or error condition "E". This decision/bit classification process is performed in bit classifier 218.

Error correction 222 is then applied to the bit classifications in order to enable the embedded watermark 224 to be recovered.

Referring now to FIG. 3, a bit-classification mechanism in a watermark recovery process is shown, in accordance with a preferred embodiment of the invention. The thresholds, indicated in equations (3) to (6) above, are used to decide whether each coefficient corresponds to either a binary "1", binary "0", or an "E".

Each of the groups of coefficients has a threshold. The threshold is calculated using the threshold decision calculation process 220 shown in FIG. 3, in accordance with a preferred embodiment of the invention.

Ideally, the recovered coefficients would show a "0" if a binary "0" was embedded, or a large number if a binary "1" is embedded. So the threshold is some large number divided by 2. In practice, this large number varies from bit-to-bit depending on the quantisation that it is anticipated would occur, and on that which actually occurred. Hence, the optimal threshold(s) are not known in advance.

As a consequence, first of all the 99 (for QCIF) watermarked coefficients are input 302 into a Sort into descending order function 304.

Secondly, the largest C coefficients are selected 306. This selection makes the assumption that there are at least C binary 1's in the 99 coefficients. Ideally C would be about ten for QCIF images.

Thirdly, the largest two coefficients are discarded 308 from the C selected previously. This discards any very large coefficients which are probably in error, as such errors may arise from the existence of high energy diagonal frequencies in the base layer pictures.

Fourthly, the mean is calculated for the remaining C-2 coefficients 310. The average (mean) value is now the "large number" which is divided by two to obtain the threshold value, as discussed above. As this threshold is rather approximate, a 15% margin is allowed, as shown below.

The threshold, "T" 312, is then transformed into four separate thresholds, corresponding to the Lower Mid ($T_{LM}$) 314, Upper-Mid ($T_{UM}$) 316, Upper ($T_U$) 318 and Lower thresholds ($T_L$) 320 using the following formulae:

$$T_{LM} = T * 0.85 \tag{6}$$

$$T_{UM} = T * 1.15 \tag{7}$$

$$T_U = (T * 2)+T \tag{8}$$

$$T_L = -T_{LM} \tag{9}$$

The Upper ($T_U$) 318 threshold is selected to be a value equivalent to the largest coefficient that could reasonably be expected. The Upper Mid, $T_{UM}$ 316 and Lower Mid, $T_{LM}$ 314 are preferably ±15% of the threshold T. The value of 15% was selected based on experimentation that showed this value to give a viable error rate.

Referring now to FIG. 4, a bit-classification mechanism 218 in a watermark recovery process is shown, in accordance with a preferred embodiment of the invention. The thresholds, indicated in equations (6) to (9) above, are used to decide whether each coefficient corresponds to either a binary "1", binary "0", or an "E".

Each coefficient is input 402 to a first determination block 404 that determines whether the coefficient value C is greater than $T_L$ and less than $T_{LM}$. If the determination is positive then a binary "0" 406 is used to represent the coefficient.

If the first determination is negative, the coefficient is input to a second determination block 408 that determines whether the coefficient value C is greater than $T_{UM}$ and less than $T_U$. If the second determination is positive then a binary "1" 410 is used to represent the coefficient.

If the second determination is also negative, an "E" 412 is used to represent the coefficient, the "E" effectively represents an error condition where there is uncertainty about whether the bit represents a binary "1" or "0".

The error condition is used subsequently to aid in the reconstruction of the recovered watermark. The method for classifying each coefficient is as follows:

If the binary watermark sequence has been repeated four times per frame, as in one embodiment of the invention, the next step in the recovery method optionally compares these four repeats, on a bit by bit basis, to form an error corrected recovered watermark pattern. Obviously, before this may happen, if any of the four repeats of the watermark within the frame were inverted before embedding, they need to be inverted again to return them to their original state.

Table 3 describes how the watermark bits are compared for error resilient recovery:

| BITS IN (ANY ORDER) | BIT OUT |
| --- | --- |
| 1,1,1,1 | 1 |
| 0,0,0,0 | 0 |

(continued)

| BITS IN (ANY ORDER) | BIT OUT |
|---|---|
| 1,1,1,0 | 1 |
| 0,0,0,1 | 0 |
| 0,0,1,1 | 1 |
| 1,1,1,E | 1 |
| 0,0,0,E | 0 |
| 1,1,0,E | 1 |
| 0,0,1,E | 0 |
| 1,1,E,E | 1 |
| 0,0,E,E | 0 |
| 1,E,E,E | 1 |
| 0,E,E,E | 0 |
| **1,0,E,E** | **1** |
| **E,E,E,E** | **1** |

Whilst the last two 'BITS IN' patterns have a 'BIT OUT' of "1", they are actually very unlikely to occur anyway (< 1:360,000). There are any number of ways one could assign values in the table when there are lots of errors.

In the preferred embodiment of the invention, values are assigned such that errors occur in a certain way. The inventors have found that it is more likely to obtain an embedded zero decode as a binary 1, because of the value of the coefficients in the base layer, rather than the reverse.

The preferred embodiment of the invention extends and improves the prior art arrangements described above by making a modification to the error correction part of the system, such that, as the bits are added a confidence is calculated. Thus, if all four of the bits being added are equal to a binary "1", there exists a very high confidence that the original watermark bit was a "1".

However, if three "E"'s and a "1" were recovered there would be a much lower confidence that the original bit was a "1".

Table 4 illustrates the number of bit errors per sequence that may be expected in the corrected watermark (s). The percentage bit error rate (% BER) in Table 4 is basically the total number of watermark bits in error from the entire sequence, divided by the total number of watermark bits available in the sequence, expressed as a percentage.

| Sequence Name | Base Bitrate (kBps) | Layer 1 Bitrate (kBps) | Watermark Key # | Watermark Strength (B) | No. Bits In Error From Combined B+E (over 57 encoded frames) | % BER | No. Bits In Error From E Only (over 57 encoded frames) | % BER |
|---|---|---|---|---|---|---|---|---|
| Foreman.qcif | 28.8 | 57.6 | 54321 | 9 | 1 | 0.02% | 1 | 0.02% |
| Foreman.qcif | 28.8 | 57.6 | 54321 | 8 | 9 | 0.16% | 9 | 0.16% |
| Foreman.qcif | 28.8 | 115.2 | 54321 | 9 | 1 | 0.02% | 0 | 0.00% |
| Foreman.qcif | 28.8 | 115.2 | 54321 | 8 | 1 | 0.02% | 0 | 0.00% |
| Foreman.qcif | 28.8 | 57.6 | 12345 | 9 | 0 | 0.00% | 0 | 0.00% |
| Foreman.qcif | 28.8 | 57.6 | 12345 | 8 | 10 | 0.18% | 10 | 0.18% |
| Foreman.qcif | 28.8 | 57.6 | 8964524 | 9 | 0 | 0.00% | 0 | 0.00% |
| Foreman.qcif | 28.8 | 57.6 | 8964524 | 8 | 8 | 0.14% | 8 | 0.14% |
| Coastguard.qcif | 28.8 | 57.6 | 54321 | 9 | 0 | 0.00% | 0 | 0.00% |
| Coastguard.qcif | 28.8 | 57.6 | 54321 | 8 | 1 | 0.02% | 1 | 0.02% |
| Coastguard.qcif | 28.8 | 115.2 | 54321 | 9 | 0 | 0.00% | 0 | 0.00% |
| Coastguard.qcif | 28.8 | 115.2 | 54321 | 8 | 0 | 0.00% | 0 | 0.00% |
| Hall_Monitor.qcif | 28.8 | 57.6 | 54321 | 9 | 3 | 0.05% | 0 | 0.00% |
| Hall_Monitor.qcif | 28.8 | 57.6 | 54321 | 8 | 3 | 0.05% | 0 | 0.00% |
| Hall_Monitor.qcif | 28.8 | 115.2 | 54321 | 9 | 1 | 0.02% | 0 | 0.00% |
| Hall_Monitor.qcif | 28.8 | 115.2 | 54321 | 8 | 1 | 0.02% | 0 | 0.00% |
| Average No. Bits In Error (Strength 9) | | | | | 0.75 | | 0.13 | |
| % Average Recovery Rate (Strength 9) | | | | | 99.99% | | 100.00% | |
| Average No. Bits In Error (Strength 8) | | | | | 4.13 | | 3.50 | |
| % Average Recovery Rate (Strength 8) | | | | | 99.93% | | 99.94% | |

Table 4: Bit error rates for various watermark sequences.

The 'Foreman', 'Coastguard' and 'Hall Monitor' referred to in the left column of table 4 are all standard images that are well known as test and evaluation images in the field of video.

Also, if the watermark were being applied to a non-real-time application, the source video may be encoded without the watermark, and information may be gathered on the quantiser values of the encoded sequence.

The source sequence may then be encoded again, this time with the watermark applied, using information from the quantiser values to adapt the watermark strength, B, on a macro-block by macro-block basis. This would ensure that the watermark remained invisible whilst ensuring that the recovery rates were very high.

It is within the contemplation of the invention that any number of watermarked coefficients can be used, and the selection of 99 watermarked coefficients to describe the preferred embodiment of the invention is made for explanatory purposes only.

A person skilled in the art would also appreciate that the four repeats step, the inverting step and the error correction step are optional, and alternative steps or number of repeats can be used such that the video transmission system will still benefit from the inventive concepts described herein.

Further, it is within the contemplation of the invention that the inventive concepts of the present invention can equally be applied to a real-time "in the loop" system. The actual value of the coefficient is embedded dependent on the last known quantisation value so that it can be real-time encoding. The decoder is also real-time but with a small latency as one would have to decode a complete frame to obtain the respective threshold levels.

It is also within the contemplation of the invention that, the inventive concepts described herein are equally applicable to SNR and spatial scalability.

It is also within the contemplation of the invention that it is possible to encode more than one bit per DCT block, even though this may risk increased visibility of the watermark.

It will be understood that the video transmission system, video transmission unit and method for watermarking digital images described above provide the following advantages:

(i) provides for watermarking of SNR enhancement layers for scalable compressed video;

(ii) the mechanism allows only the user with the correct key to recover the watermark, and stops any possibility of a collusion attack on the sequence to remove the watermark or discover its contents;

(iii) the mechanisms are therefore very useful in tamper detection applications (authentication rather than copyright);

(iv) the mechanisms also provide a means of fragile watermarking that allow attacks to be characterised;

(v) the mechanisms are also backward compatible, in that they may be readily coupled to existing video communication systems and units;

(vi) the mechanisms improve consumer confidence in any video facilities that they utilise, for example downloaded movies, with regard to protection against piracy;

(vii) the mechanisms provides significant benefits in increasing a user's confidence in image integrity for applications/environments such as police or medical use of video images; and

(viii) the mechanisms are equally applicable to spatial scalable encoded video.

Scalable video system technology may be implemented in the 3$^{rd}$ generation (3G) of digital cellular telephones, commonly referred to as the Universal Mobile Telecommunications Standard (UMTS). Scalable video system technology may also find applicability in the packet data variants of both the current 2$^{nd}$ generation of cellular telephones, commonly referred to as the global packet-data radio system (GPRS) and the TErrestrial Trunked RAdio (TETRA) standard for digital private and public mobile radio systems.

Furthermore, scalable video system technology may also be utilised in the internet. MPEG-4 may also adopt watermarking in that particular standard. The aforementioned inventive concepts will therefore find applicability in, and thereby benefit, all these emerging technologies.

In summary, a video transmission system has been provided where the video transmission system includes a discrete cosine transform function receiving an unwatermarked video signal transmission and means for applying a watermark coefficient to the video signal transmission output from the discrete cosine transform function to protect the integrity of the video signal.

A video transmission system has also been provided, including means for receiving a scalable video bit stream and means for applying a watermark coefficient to the scalable video bit stream to protect the integrity of the video signal.

A method of determining a confidence level in an integrity of a watermarked image in a video transmission system has also been provided. The method includes the steps of: receiving a watermarked image; extracting a plurality of watermark coefficients from the watermarked image; and determining a confidence level of the integrity of the watermarked image based on a consistency of extracted watermark bits.

A method of detecting tampering of a watermarked digital image has also been provided. The method includes the steps of: receiving a digitally watermarked image; processing at least some watermarked parts of the image; recovering the watermark at an actual recovery rate; and comparing the actual recovery rate with the anticipated recovery rate to indicate whether tampering of the watermarked image has occurred.

**Claims**

1.  A video transmission system (100, 200), for use with scalable video systems, comprising:

    means for performing a discrete cosine transform function (104,208), the means for performing a discrete cosine transform function (104,208) receiving an unwatermarked video signal transmission and providing a scalable video bit stream;
    means for applying a watermark coefficient (112) to the scalable video bit stream output from the discrete cosine transform function to protect the integrity of the video signal; and

    wherein the scalable video bit stream includes at least a base layer of video signals and an enhancement layer of video signals (201), and the means for applying a watermark coefficient applies the watermark coefficient to the enhancement layer.

2.  A video transmission system in accordance with claim 1, wherein the base layer of video signals and the enhancement layer of video signals are combined into a combined video signal transmission (201), the watermark application being applied such that the watermark is recoverable from the enhancement layer or from the combined base plus enhancement layer (201).

3.  A video transmission system in accordance with any of the preceding claims, wherein the watermark coefficient is selected using a linear congruent random number generator with the key (110, 214) as a seed such that the watermark is recoverable without apriori knowledge of the watermark in the video transmission signal.

4. A video transmission system in accordance with claim 3, wherein the video transmission signal includes a plurality of signal to noise ratio enhanced enhancement layer coefficient blocks, and the selected watermark coefficient is altered, depending on the current watermark bit and previous quantisation values.

5. A video transmission system in accordance with claim 3 or claim 4, wherein if a binary "0" is to be cast, the watermark coefficient is set to a binary "0" and if a binary "1" is to be cast, the watermark coefficient is changed such that it will survive quantisation.

6. A video transmission system in accordance with any of the preceding claims, wherein the watermark coefficient is positioned in a frequency-variable video transmission signal capable of representation in the DCT transform domain in a matrix arrangement, the positioning of the watermark being performed according to at least one of the following parameters:

(i) positioned at high diagonal frequencies to avoid visible detection or visible artefacts on a reconstructed image;
(ii) positioned at high diagonal frequencies in an enhancement layer of the video transmission signal to reduce interference emanating from the base layer when the layers are combined;
(iii) positioning at lower frequencies to enable the watermark to be robust to compression of an enhancement layer of the video transmission signal.

7. A video transmission system in accordance with any of the preceding claims, wherein the watermark coefficient is embedded into the video transmission signal of binary digits, in accordance with any one of the following mechanisms:

(i) inverting the binary digits of the watermark if the watermark signal contains more binary "1"s than binary "0"s for minimum visibility of the watermark sequence;
(ii) embedding the watermark coefficient twice in its non-inverted state and twice in an inverted state within a video frame for optimum detection of the watermark coefficient and resilience to error;
(iii) embedding the watermark co-efficient in a non-inverted state if visibility or robustness of the watermark coefficient is unimportant.

8. A video transmission system in accordance with any one of the preceding claims, wherein recovery of the watermark coefficient includes:

threshold decision means (220) for receiving the video signal transmission containing a watermark coefficient; calculating a coefficient (218,312) from the received signal; and
determining a value of a watermark bit (224) dependent upon a comparison between the calculated coefficient and
at least one of a plurality of threshold levels (314-320).

9. A video transmission system in accordance with claim 8, further comprising a bit-classification mechanism (218), and wherein the plurality of threshold levels (314-320) include at least four threshold levels for determining whether the watermark bit is a binary "1", a binary "0" or represents an error condition.

10. A video transmission system in accordance with claim 9, wherein confidence in an accuracy of the watermark bit is based on the calculated bit-classifications of each of the selection of the largest watermark coefficients.

11. A video transmission system in accordance with any of the preceding claims, wherein:

the watermark coefficient is applied in a real-time application, the video transmission system comprising determination means for determining quantiser values of an unwatermarked encoded sequence of a source video signal in a first time period; and
the means for applying a watermark coefficient applies a watermark to the source video signal in a second time period, in response to said determination.

12. A video communication unit adapted to operate in the video transmission system of any of the preceding claims.

13. A method of determining a confidence level in an integrity of a watermarked image in a video transmission system, the method comprising the steps of:

receiving a watermarked image;
extracting a plurality of watermark coefficients from the watermarked image; and
determining a confidence level of the integrity of the watermarked image based on a consistency of extracted watermark bits.

14. A method of detecting tampering of a watermarked digital image, the method comprising the steps of:

receiving a digitally watermarked image;
processing at least some watermarked parts of the image; recovering the watermark at an actual recovery rate; and
comparing the actual recovery rate with the anticipated recovery rate to indicate whether tampering of the watermarked image has occurred.

15. A method of watermarking a video signal transmission in a video transmission system, the method comprising the steps of:

receiving (102) an unwatermarked video signal;
performing (104) a discrete cosine transform function on the received video signal, to provide a scalable video bit stream;
applying a watermark coefficient (112) to the scalable video bit stream to protect the integrity of the video signal; and

wherein the scalable video bit stream includes at least a base layer of video signals and an enhancement layer of video signals, and the step of applying a watermark coefficient applies the watermark coefficient to the enhancement layer.

16. A method of watermarking a video signal transmission in a video transmission system in accordance with claim 15, the method further comprising the steps of:

combining a base layer of video signals and an enhancement layer of video signals into a combined video signal transmission; and
applying the watermark application in such a manner that the watermark is recoverable from the enhanced layer.

17. A method of recovering a watermark in a video signal transmission, the method comprising the steps of:

receiving a scalable video bit stream containing a watermark coefficient;
performing (208) a discrete cosine transform function on the received scalable video bit stream;
recovering (224) a watermark coefficient from the scalable video bit stream;

the method further comprising the steps of:

calculating a coefficient from the received signal; and
determining a value of a watermark bit dependent upon a comparison between the calculated coefficient and at least one of a plurality of threshold levels.

**FIG. 1** 100

200

**FIG. 2**

RECOVERED WATERMARK

**FIG. 3**

**FIG. 4**

218